Europäisches Patentamt

European Patent Office

Office européen des brevets

(11) Veröffentlichungsnummer: **0 258 661**
**A2**

(12) **EUROPÄISCHE PATENTANMELDUNG**

(21) Anmeldenummer: **87111236.3**

(22) Anmeldetag: **04.08.87**

(51) Int. Cl.⁴: **G03B 27/32**

(30) Priorität: **30.08.86 DE 3629550**

(43) Veröffentlichungstag der Anmeldung:
**09.03.88 Patentblatt 88/10**

(84) Benannte Vertragsstaaten:
**CH DE FR GB IT LI**

(71) Anmelder: **METEOR-SIEGEN Apparatebau
Paul Schmeck GmbH
Frankfurter Strasse 27
D-5900 Siegen(DE)**

(72) Erfinder: **Korn, Walter
Eva von Thiele-Winkler-Strasse 8
D-5905 Freudenberg(DE)**

(74) Vertreter: **Eisenführ & Speiser
Martinistrasse 24
D-2800 Bremen 1(DE)**

(54) **Reprografische Kamera.**

(57) Es wird eine reprografische Kamera angegeben, die einen Vorlagentisch, ein Objektiv und eine Bildbühne enthält, die zur Herstellung einer Abbildung oder eines Negativs von einer Vorlage relativ zueinander beweglich sind. Um während der Scharfstellung des auf die Bildbühne projizierten Bildes dem Benutzer eine direkte Beobachtung des projizierten Bildes zu ermöglichen, ist in dem um die Bildbühne vorhandenen Abdunkelungsgehäuse eine Sichtöffnung mit Sicht auf die Bildbühne und ein Verschluss für die Sichtöffnung vorgesehen.

Fig. 1

## Reprografische Kamera

Die Erfindung betrifft eine reprografische Kamera mit einem Vorlagentisch, einem Objektiv und einer Bildbühne, die zur Herstellung einer Abbildung oder eines Filmnegativs von einer Vorlage relativ zueinander bewegbar sind, wobei der Vorlagentisch und/oder die Bildbühne relativ zum Objektiv verstellbar sind, und mit einem Abdunkelungsgehäuse um die Bildbühne.

Derartige reprografische Kameras sind bekannt und dienen der Herstellung fotografischer Negative von Vorlagen, Farb-oder Schwarz/Weiß-Dias oder von dreidimensionalen Gegenständen, sie lassen sich auch unmittelbar zur Herstellung von Offset-Druckfolien einsetzen. Um die Vorlage scharf und ggfs. auch in verschiedenen Maßstäben abbilden zu können, sind die Bildbühne und der Vorlagentisch relativ zum Objektiv verschiebbar. Nachteilig bei den bekannten reprografischen Kameras ist es dabei, dass die Scharfstellung des von der Vorlage auf die Bildebene projizierten Bildes nur anhand von Skalen erfolgt, an denen die entsprechenden Positionen des Vorlagentisches und/oder der Bildbühne eingestellt werden können, wobei eine Betrachtung des auf die Bildebene oder Filmebene projizierten Bildes - und damit eine genaue Beurteilung der Bildschärfe - nicht möglich ist.

Aufgabe der Erfindung ist es daher, eine reprografische Kamera der eingangs genannten Art derart weiterzubilden, dass während der Scharfstellung des auf die Bildebene projizierten Bildes eine Betrachtung dieses Bildes durch den Benutzer möglich ist.

Diese Aufgabe wird bei der reprografischen Kamera der eingangs genannten Art erfindungsgemäss gelöst durch eine Sichtöffnung in der Wand des Abdunkelungsgehäuses mit Sicht auf die Bildbühne und einen Verschluss für die Sichtöffnung.

Die Vorteile der Erfindung liegen insbesondere darin, dass während der Scharfeinstellung des von der Vorlage auf die Bildebene projizierten Bildes, d.h. während der exakten Positionseinstellung von Vorlagentisch und/oder Bildbühne der Benutzer das projizierte Bild mit dem Auge - durch die geöffnete Sichtöffnung hindurch - sehen und hinsichtlich der Bildschärfe beurteilen, und den Scharfeinstellvorgang beenden kann, wenn die optimale Scharfeinstellung erreicht ist. Anschliessend wird der Verschluss der Sichtöffnung geschlossen, und es kann dann in die Bildebene ein Film eingeführt und der Film dann mit dem projizierten Bild belichtet werden. Besteht die Vorlage aus einem Farbdia oder einem Schwarz/Weiß-Dia, so ist eine genaue Scharfstellung in Abhängigkeit von der tatsächlichen Position des Vorlagen-Filmdias innerhalb des Dia-Rähmchens notwendig und nach der Erfindung in einfacher Weise rasch möglich. Demgegenüber ist eine optimale Scharfstellung in Abhängigkeit der jeweiligen Wölbung oder Position des Vorlagen-Filmnegativs ohne Sicht des projizierten Bildes nicht durchzuführen.

Bevorzugt ist in die Sichtöffnung ein Okular, z.B. ein Monokular eingesetzt, dessen Strahlengang bis zur Bildebene mittels eines kleinen Umlenkspiegels und ggfs. auch mittels des zwischen Objektiv und Bildebene in der Kamera üblicherweise vorhandenen Oberflächenspiegels zur Bildebene hin geführt wird.

Besonders bevorzugt besitzt das Abdunkelungsgehäuse einen mittleren Gehäuseteil, der den Oberflächenspiegel und ggfs. auch das Objektiv umfasst. Dieser mittlere Gehäuseteil ist einseitig offen; an der Öffnung des mittleren Gehäuseteils - schliesst - optisch dicht - ein Faltenbalg an, der die Bildebene an ihrer Umfangskante dicht umschliesst.

In einer bevorzugten Ausführungsform der Erfindung, die insbesondere zur Bilderstellung von Dia-Vorlagen dient, ist auch der Vorlagentisch in einem Gehäuseteil enthalten, welches über einen weiteren Faltenbalg vor die Objektivöffnung des mittleren Gehäuseteils setzbar ist.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert.

Es zeigen:

Fig. 1 einen Querschnitt durch eine reprografische Kamera mit einem Auflicht-Vorlagentisch; und

Fig. 2 einen Querschnitt durch eine reprografische Kamera mit einem Durchlicht-Vorlagentisch.

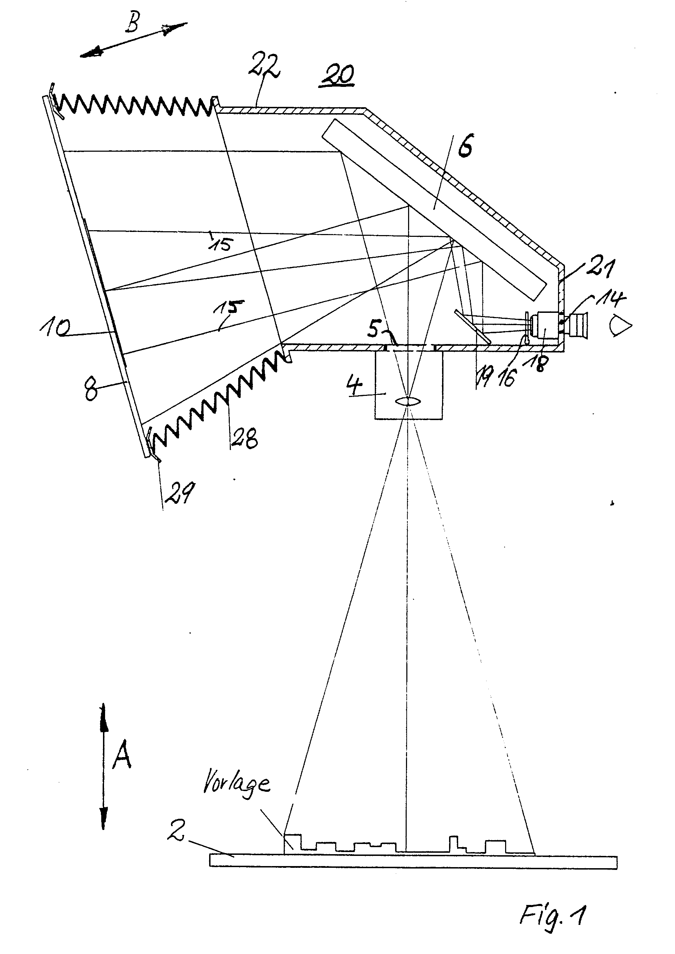

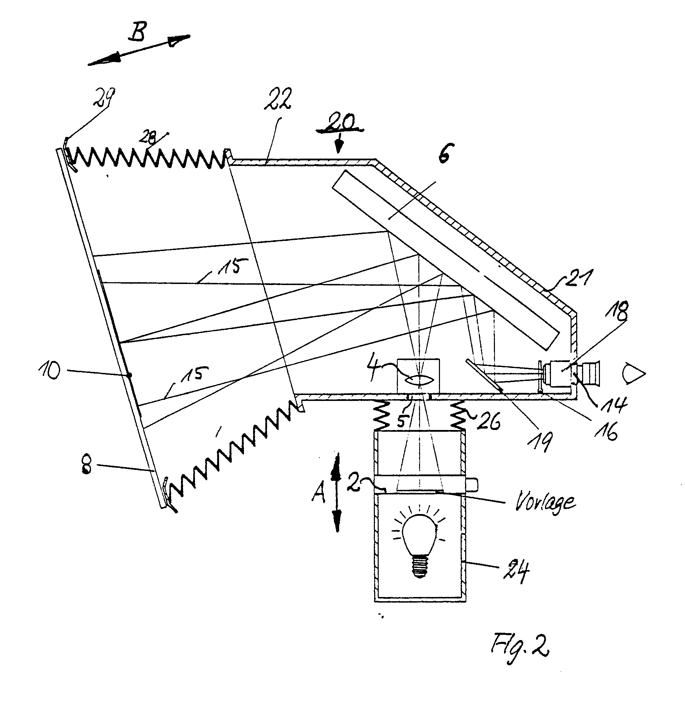

Die Fig. 1 und 2 zeigen einen schematischen Querschnitt durch eine reprografische Kamera mit Auflichtbeleuchtung der Vorlage (Fig. 1) bzw. Durchlichtbeleuchtung der Vorlage (Fig. 2). Ein Vorlagentisch 2 ist in Richtung des Doppelpfeiles A manuell oder motorisch angetrieben auf-und abbewegbar und dient zur Aufnahme von ebenen oder dreidimensionalen Vorlagen, die durch nicht dargestellte Lampen mit Auflicht bestrahlt werden. In vorgegebenem Abstand vom Vorlagentisch 2 ist ein Objektiv 4 vorgesehen, in Strahlenrichtung hinter dem Objektiv 4 befindet sich ein schräg gestellter Oberflächenspiegel 6, der die Lichtstrahlen zu einer Bildbühne 8 hin reflektiert, die dem Oberflächenspiegel 6 zugewandt eine Bildebene oder Filmebene 10 besitzt, in der ein Film mittels einer geeigneten Transporteinrichtung (nicht dargestellt) geführt wird.

Die Bildbühne 8 ist - auf der Seite der Bildebene 10 - mit einem Abdunkelungsgehäuse 20 gegen Lichteinfall abgedunkelt, und zwar schliesst sich auf der Seite der Bildebene 10 über einen Dichtrahmen 29 ein Faltenbalg 28 an, der in ein festes Gehäuseteil 22 übergeht, welches den Oberflächenspiegel 6 enthält. Das Objektiv 4 ist entweder ausserhalb des Gehäuseteils 22 (Fig. 1) oder innerhalb des Gehäuseteils 22 (Fig. 2) angeordnet, hinter bzw. vor dem Objektiv 4 befindet sich im Abdunkelungsgehäuse 20 eine entsprechende Objektivöffnung 5. Zur Änderung des Abbildungsmaßstabes lässt sich auch die Bildbühne 8 längs des Doppelpfeiles B hin-und herverstellen.

In Fig. 2 ist der Vorlagentisch 2 in einem Gehäuseteil 24 angeordnet, welches Ein-und Ausgabeöffnungen 25 zum Zuführen und Herausnehmen einer Vorlage besitzt.

Das Gehäuseteil 24 ist über einen zweiten Faltenbalg 26 vor die Objektivöffnung 5 gesetzt. Zum Scharfstellen des auf die Bildebene 10 projizierten Bildes lässt sich das Gehäuseteil 24 längs des Doppelpfeiles A hin-und herbewegen.

In der Wand 21 des Abdunkelungsgehäuses 20 ist eine Sichtöffnung 14 eingearbeitet, die mittels eines Verschlusses 16 vom Benutzer verschlossen oder geöffnet werden kann. In die Sichtöffnung 14 ist ein Okular 18 eingesetzt. Der Strahlengang 15 des Okulars 18 wird - in der dargestellten Ausführungsform - mittels eines Umlenkspiegels 19 auf den Oberflächenspiegel 6 der Kamera geführt, welcher den Strahlengang 15 auf die Bildebene 10 lenkt, so dass vom Okular 18 aus - bei geöffnetem Verschluss 16 - vom Benutzer die Bildebene 10 mit dem Auge direkt beobachtet werden kann. Vor Einführen eines Films kann daher ein von der Vorlage auf die Bildebene projiziertes Bild durch Verstellung der Position des Vorlagentisches - scharfgestellt werden und dieser Einstellvorgang lässt sich vom Benutzer dann beenden, wenn der Benutzer durch das Okular 18 die optimale Bildschärfe wahrnimmt. Anschliessend wird der Verschluss 16 geschlossen, der Film in die Filmebene transportiert und dann wird der Film mit dem projizierten Bild belichtet.

Auf der Bildebene 10 der Bildbühne 8 ist - auf kleiner Fläche - ein weisser Kontrastbelag vorgesehen, der die genaue Beobachtung und Scharfstellung eines auf die Bildebene 10 projizierten Bildes durch das Okular 18 erlaubt, welches bevorzugt ein Monokular ist. Der weisse Kontrastbelag ermöglicht es dem Betrachter, das projizierte Bild in diesem Bereich genau erkennen zu können. Um - nach dem Zuführen des Films - bei der anschliessen den Filmbelichtung unkontrollierte Reflexionen zu verhindern, die von dem Kontrastbelag ausgehen würden, ist der Kontrastbelag an einer Stelle der Bildbühne 8 angebracht, die auch beim kleinsten Filmformat von dem Film bedeckt wird.

## Ansprüche

1. Reprografische Kamera mit einem Vorlagentisch, einem Objektiv und einer Bildbühne, wobei die Position des Vorlagentisches und/oder der Bildbühne zur Herstellung einer Abbildung oder eines Negativs von einer Vorlage relativ zum Objektiv verstellbar ist, und mit einem Abdunkelungsgehäuse um die Bildbühne, gekennzeichnet durch eine Sichtöffnung (14) in der Wand (21) des Abdunkelungsgehäuses (20) mit Sicht auf die Bildbühne (8), und einen Verschluss (16) für die Sichtöffnung (14).

2. Reprografische Kamera nach Anspruch 1, dadurch gekennzeichnet, dass in die Sichtöffnung (14) ein Okular (18) eingesetzt ist.

3. Reprografische Kamera nach Anspruch 1 oder 2, dadurch gekennzeichnet, dass der Strahlengang (15) von der Sichtöffnung (14) zur Bildbühne (8) mittels Umlenkspiegel (19, 6) geführt ist.

4. Reprografische Kamera nach einem der vorstehenden Ansprüche, dadurch gekennzeichnet, dass das Abdunkelungsgehäuse (20) die Bildbühne (8), das Objektiv (4) und den Vorlagentisch (2) umfasst.

5. Reprografische Kamera nach Anspruch 4, dadurch gekennzeichnet, dass das Abdunkelungsgehäuse (20) zwischen dem das Objektiv (4) aufnehmenden Gehäuseteil (22) und dem den Vorlagentisch (2) aufnehmenden Gehäuseteil (24) einen Faltenbalg (26) besitzt.

6. Reprografische Kamera nach Anspruch 4 oder 5, dadurch gekennzeichnet, dass das Abdunkelungsgehäuse (20) zwischen dem das Objektiv (4) aufnehmenden Teil und der Bildbühne (8) einen zweiten Faltenbalg (28) aufweist, der mittels eines Dichtrahmens (29) am Umfang der Bildbühne (8) befestigt ist.

7. Reprografische Kamera nach einem der vorstehenden Ansprüche, dadurch gekennzeichnet, dass auf der Bildebene (10) der Bildbühne (8) im Bereich des kleinsten zu verarbeitenden Filmformats ein auf kleiner Fläche begrenzter weisser Kontrastbelag vorgesehen ist.

Fig. 1

0 258 661

Fig. 2